# EUROPEAN PATENT APPLICATION

(11) **EP 0 588 120 A1**
(43) Date of publication of application: **23.03.1994**
(21) Application number: 93113654.3
(22) Date of filing: 26.08.1993
(51) Int. Cl.: C08K 3/08, C08G 59/24, C08K 3/36, C08G 59/54, C08G 59/50, C08L 63/00

(54) **Casting epoxy resin composition and cured product thereof**

(30) Priority: 28.08.1992 JP 251861/92
(71) Applicant: MITSUBISHI CHEMICAL CORPORATION, Chiyoda-ku, Tokyo (JP)
(72) Inventor: Sugimoto, Toshio, Mitsubishi Petrochem.Co., Ltd., Inashiki-gun, Ibaraki (JP); Kawaguchi, Sadahiko, Mitsubishi Petrochem.Co.,Ltd., Inashiki-gun, Ibaraki (JP); Esaki, Akira, c/o Mitsubishi Petrochem.Co., Ltd., Inashiki-gun, Ibaraki (JP)
(74) Representative: Hansen, Bernd, Dr. Dipl.-Chem.

(57) **Abstract**

A casting epoxy resin composition comprising (a) a low-viscosity epoxy resin having a viscosity of not more than 80 poise at 25°C which contains not less than 30% by weight of at least one epoxy resin selected from bisphenol F diglycidyl ether and bisphenol AD diglycidyl ether based on the total epoxy resin, (b) a cold cure type liquid curing agent for an epoxy resin, (c) iron powder containing not less than 50% by weight of fine particles of not greater than 44 µm in particle size based on the total iron powder, and (d) an anti-settling agent, the amount of component (c) being from 170 to 300 parts by weight per 100 parts by weight of the total amount of components (a) and (b); and a cast article obtained therefrom are disclosed. The casting epoxy resin composition has excellent storage stability, being freed of settling of iron powder, and provides a cured article with high hardness and excellent press durability.

## Description

### FIELD OF THE INVENTION

This invention relates to a casting epoxy resin composition containing iron powder and to a cured product thereof. More particularly, it relates to a casting epoxy resin composition containing iron powder which is useful for repairs of various jigs and metallic equipment or parts or as a molding material for resin molds for production of various metallic parts, and to a cured product thereof.

### BACKGROUND OF THE INVENTION

Epoxy resin compositions containing a metal powder, e.g., iron powder is known. For example, an iron powder-containing epoxy resin composition has been used as a casting resin for molds, such as a zinc alloy-resin combined mold (see JP-B-58-151925, the term "JP-B" as used herein means an "examined published Japanese patent application"), which is used for test production of automotive parts, such as doors or hoods, or molds for small-scale production of such parts to meet specific requirements. Such an epoxy resin composition is particularly required to have excellent storage stability and to provide a cured product with excellent press durability.

### SUMMARY OF THE INVENTION

An object of the present invention is to improve storage stability of a casting epoxy resin composition containing iron powder and to improve durability of a cured product obtained therefrom. In other words, the object of the present invention is to provide a casting iron powder-containing epoxy resin composition which exhibits excellent storage stability without causing settling of the iron powder and provides a cured product excellent in surface hardness and press durability.

Another object of the present invention is to provide a cured product obtained from the above-mentioned epoxy resin composition.

The present invention relates to a casting epoxy resin composition comprising (a) a low-viscosity epoxy resin having a viscosity of not more than 80 poise at 25°C which contains not less than 30% by weight of at least one epoxy resin selected from bisphenol F diglycidyl ether and bisphenol AD diglycidyl ether based on the total epoxy resin, (b) a cold cure type liquid curing agent for an epoxy resin, (c) iron powder containing not less than 50% by weight of fine particles of not greater than 44 µm in particle size based on the total iron powder, and (d) an anti-settling agent, the amount of component (c) being from 170 to 300 parts by weight per 100 parts by weight of the total amount of components (a) and (b).

The present invention also relates to a cast and cured article of the above-mentioned epoxy resin composition.

### DETAILED DESCRIPTION OF THE INVENTION

Component (a), a low-viscosity epoxy resin, contains not less than 30% by weight of at least one epoxy resin selected from bisphenol F diglycidyl ether and bisphenol AD diglycidyl ether based on the total epoxy resin and has a viscosity of not more than 80 poise, preferably from 5 to 50 poise, at 25°C. For example, the viscosity is measured using a Brookfield type viscometer. Use of the low-viscosity epoxy resin whose viscosity is 80 poise or lower provides a composition with its viscosity controlled sufficiently low not to impair workability even when compounded with fillers, especially iron powder, at a high compounding ratio. If the content of bisphenol F diglycidyl ether and/or bisphenol AD diglycidyl ether in component (a) is less than 30% by weight even with the viscosity being not more than 80 poise, the resulting cured product has reduced press durability.

The bisphenol F diglycidyl ether and bisphenol AD diglycidyl ether which constitute component (a) are represented by formulae (I) and (II), respectively: 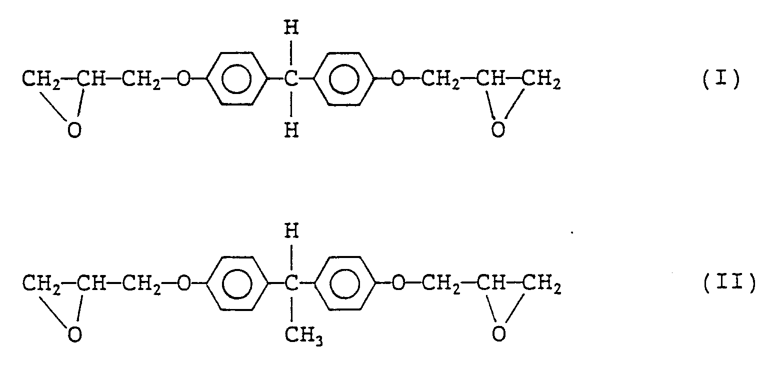
Component (a) may consists solely of the above-mentioned bisphenol F diglycidyl ether and/or bisphenol AD diglycidyl ether or, if desired, may further contain not more than 70% by weight of other epoxy resins as far as component (a) as a whole should have a viscosity of not more than 80 poise at 25°C.

Other epoxy resins which may be mixed with bisphenol F diglycidyl ether and/or bisphenol AD diglycidyl ether include glycidyl ester type liquid epoxy resins, such as bisphenol A diglycidyl ether, tetraglycidyl aminodiphenylmethane, tetraglycidyl-bis(4-aminocyclohexyl)methane, tetraglycidyl xylenediamine, tetraglycidyl cyclohexyldimethylamine, triglycidyl m-aminophenol, triglycidyl p-aminophenol, triglycidylm-aminoalkylphenol, triglycidylp-aminoalkylphenol, and diglycidyl phthalate; diglycidylaniline, 1,6-hexamethylene glycol diglycidyl ether, neopentyl glycol diglycidyl ether, polyethylene glycol diglycidyl ether, polypropylene diglycidyl ether, and novolak epoxy resins.

Component (b) is a cold cure type liquid epoxy curing agent which is capable of conducting cure reaction at room temperature (20 to 30°C). Component (b) is compounded generally in an amount of from 20 to 120 parts by weight, preferably from 30 to 100 parts by weight, per 100 parts by weight of the amount of component (a) and is selected from various types including known epoxy curing agents. Examples of suitable curing agents include aliphatic polyamines, e.g., triethylenetetramine and tetraethylenepentamine; cyclic aliphatic amines, e.g., N-aminoethylpiperazine; aromatic amines, e.g., m-xylylenediamine; polyaminoamide compounds (polyamide resins), and heterocyclic amines. Of these cold cure type liquid epoxy curing agents preferred are polyaminoamide compounds (or polyamide resins) and heterocyclic amines. Typical examples of the heterocyclic amines are those represented by formula: 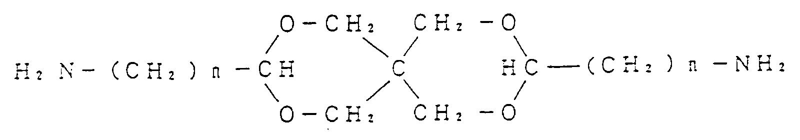
wherein n represents an integer of from 2 to 4.
These curing agents may be used either individually or in combination of two or more thereof.

Component (c), iron powder containing not less than 50% by weight of fine particles having a particle size of not more than 44 µm, functions to improve abrasion resistance (press durability, etc.) of a cured article. Component (c) includes those obtained by further grinding iron powder, such as spongy iron powder (reduced iron powder) or steel powder so as to have at least 50% by weight of fine particles of 44 µm or less in diameter. A mixture of fine spongy iron powder and fine steel powder is preferred. If the content of fine powder having a particle size of not greater than 44 µm is less than 50% by weight, the resin composition has reduced storage stability, tending to suffer from settling of the iron powder. Where such a resin composition is used for production of a casting mold for metals, the resulting casting mold only provides a metal cast article with poor appearance. An average particle size of the iron powder is preferably not greater than 100 µm, with the preferred lower limit being 5 µm.

It is essential that component (c) should be compounded in an amount of from 170 to 300 parts by weight, preferably from 180 to 280, per 100 parts by weight of the total amount of components (a) and (b). At too low an amount, component (c) fails to sufficiently provide surface hardness and improve abrasion resistance of a cured resin. At too high an amount, the resin composition has poor fluidity and poor workability.

Component (d), an anti-settling agent, functions to prevent settling of iron powder in the resin composition during storage or transportation. The anti-settling agent to be added can be selected appropriately from fine aluminum powder, fine asbestos powder, ultrafine silica powder, fine organic bentonite powder, surface-treated ultrafine calcium carbonate powder as well as various commercially available anti-setting additives. Preferred of them are ultrafine silica powder and fine organic bentonite powder. Component (d) is usually present in an amount of from 0.01 to 10 parts by weight, and preferably from 0.1 to 5 parts by weight, per 100 parts by weight of component (a). If the amount of component (d) is less than 0.01 part, settling of iron powder cannot be prevented sufficiently. Too high an amount of component (d) results in an increase in viscosity of the composition, leading to poor workability.

If desired, the epoxy resin composition of the present invention may further contain various compounding additives other than components (a) to (d), for example, metal powders other than iron powder, inorganic fillers, defoaming agents, coupling agents, reactive diluents, leveling agents, lubricants, flame retardants, dispersing agents, adhesion-imparting agents, wetting agents, dyes, pigments, rust inhibitors, and so forth.

The epoxy resin composition of the present invention can be prepared by mixing the essential components (a) to (d) and any additives as desired at a prescribed ratio and kneading the mixture by means of, for example, a kneader, a roll or a mixer. Usually, component (b) is added to a pre-mixture of components (a), (c), and (d) just before casting. Curing of the epoxy resin composition can be carried out by casting in an appropriate mold and allowing to stand at room temperature for about 1 day to provide an epoxy resin cast article.

The present invention will now be illustrated in greater detail with reference to Examples, but it should be understood that the present invention is not deemed to be limited thereto. All the parts and percents are by weight unless otherwise indicated.

### EXAMPLE 1

| | |
|---|---|
| Bisphenol F diglycidyl ether (viscosity: 30 poise at 25°C) | 100 parts |
| Iron powder (content of particles of 44 µm or smaller: 72%) | 380 parts |
| Anti-settling agent ("New D Orben" produced by Shiraishi Kogyo Co., Ltd.) | 3 parts |

The above components were kneaded in a kneader. The storage stability of the mixture is shown in Table 1 below. To 100 parts of the resulting mixture was added 13 parts of a commercially available polyaminoamide ("Thomide 2500" produced by Fuji Kasei Kogyo Co., Ltd.), followed by uniformly mixing to prepare an epoxy resin composition.

The epoxy resin composition was cast in a mold and allowed to stand at room temperature for 2 days to cure to obtain a model for pressing having a diameter of 8 cm and a thickness of 1 cm. The hardness and press durability of the resulting cast article were evaluated as follows. The results obtained are shown in Table 1.

### 1) Hardness:

The surface hardness of the mold was measured with a Shore 'D' durometer at 25°C.

### 2) Press Durability:

A 0.8 mm thick steel plate was pressed on the model, and the wear of the model at the corder was measured with an R-gauge. The number of pressing cycles conducted until the initial R value of 2.25 mm increased to 2.50 mm was measured.

### EXAMPLE 2

An epoxy resin composition was prepared in the same manner as in Example 1, except for replacing 13 parts of Thomide 2500 (curing agent) with 14 parts of a commercially available liquid heterocyclic modified amine ("Epomate B-002" produced by Yuka Shell Epoxy Co., Ltd.).

The resin composition was cast in the same manner as in Example 1, and the resulting model was tested in the same manner as in Example 1. The results obtained are shown in Table 1.

### EXAMPLE 3

| | |
|---|---|
| Bisphenol A diglycidyl ether (viscosity: 120 poise at 25°C)* | 10 parts |
| Bisphenol F diglycidyl ether (viscosity: 30 poise at 25°C)* | 90 parts |
| Iron powder (content of fine particles of 44 µm or smaller: 71%) | 340 parts |
| Anti-settling agent ("New D Orben") | 2 parts |

| | |
|---|---|
| * A mixed epoxy resin comprising the above-mentioned two epoxy resins had a viscosity of 40 poise at 25°C. | |

The above components were kneaded in a kneader. The storage stability of the mixture is shown in Table 1. To 100 parts of the resulting mixture was added 15 parts of a commercially available liquid heterocyclic amine ("Epomate B-002") as the curing agent, followed by uniformly mixing to prepare an epoxy resin composition.

The resin composition was cast in the same manner as in Example 1, and the resulting model was tested in the same manner as in Example 1. The results obtained are shown in Table 1.

### COMPARATIVE EXAMPLE 1

An epoxy resin composition was prepared in the same manner as in Example 1, except for replacing 100 parts of bisphenol F diglycidyl ether with 100 parts of bisphenol A diglycidyl ether having a viscosity of 120 poise at 25°C.

The resin composition was cast in the same manner as in Example 1, and the resulting model was tested in the same manner as in Example 1. The results obtained are shown in Table 1.

### COMPARATIVE EXAMPLE 2

| | |
|---|---|
| Bisphenol F diglycidyl ether (viscosity: 30 poise at 25°C) | 100 parts |
| Iron powder (Content of fine particles of 44 µm or smaller: 65%) | 200 parts |
| Anti-settling agent ("New D Orben") | 3 parts |

The above components were kneaded in a kneader. The storage stability of the mixture is shown in Table 1. To 100 parts of the resulting mixture was added 19 parts of a commercially available liquid polyaminoamide ("Thomide 2500"), followed by uniformly mixing to prepare an epoxy resin composition.

The resin composition was cast in the same manner as in Example 1, and the resulting model was tested in the same manner as in Example 1. The results obtained are shown in Table 1.

**TABLE 1**

| Example No. | Storage Stability* | Shore D Hardness | Press Durability |
|---|---|---|---|
| Example 1 | none | 88 | 38 |
| Example 2 | none | 87 | 40 |
| Example 3 | none | 88 | 45 |
| Compar. Example 1 | none | 88 | incapable of casting to obtain a press model |
| Compar. Example 2 | none | 80 | 5 |

| | | | |
|---|---|---|---|
| Note: * Settling of iron powder during storage at 25°C for for 1 month. | | | |

The casting epoxy resin compositions according to the present invention has excellent storage stability without causing settling of iron powder and provides a cured article with high hardness and satisfactory press durability.

While the invention has been described in detail and with reference to specific examples thereof, it will be apparent to one skilled in the art that various changes and modifications can be made therein without departing from the spirit and scope thereof.

## Claims

1. A casting epoxy resin composition comprising (a) a low-viscosity epoxy resin having a viscosity of not more than 80 poise at 25°C which contains not less than 30% by weight of at least one epoxy resin selected from bisphenol F diglycidyl ether and bisphenol AD diglycidyl ether based on the total epoxy resin, (b) a cold cure type liquid curing agent for an epoxy resin, (c) iron powder containing not less than 50% by weight of fine particles of not greater than 44 µm in particle size based on the total iron powder, and (d) an anti-settling agent, the amount of component (c) being from 170 to 300 parts by weight per 100 parts by weight of the total amount of components (a) and (b).

2. A casting epoxy resin composition as claimed in Claim 1, wherein said cold cure type liquid curing agent is a curing agent containing at least one compound selected from a polyaminoamide compound and a heterocyclic amine compound.

3. An epoxy resin cast article obtained by casting and curing an epoxy resin composition comprising (a) a low-viscosity epoxy resin having a viscosity of not more than 80 poise at 25°C which contains not less than 30% by weight of at least one epoxy resin selected from bisphenol F diglycidyl ether and bisphenol AD diglycidyl ether based on the total epoxy resin, (b) a cold cure type liquid curing agent for an epoxy resin, (c) iron powder containing not less than 50% by weight of fine particles of not greater than 44 µm in particle size based on the total iron powder, and (d) an anti-settling agent, the amount of component (c) being from 170 to 300 parts by weight per 100 parts by weight of the total amount of components (a) and (b).

4. An epoxy resin cast article as claimed in Claim 3, wherein said cold cure type liquid curing agent is a curing agent containing at least one compound selected from a polyaminoamide compound and a heterocyclic amine compound.
